# EUROPÄISCHE PATENTSCHRIFT

(11) **EP 2 929 966 B1**
(45) Veröffentlichungstag und Bekanntmachung des Hinweises auf die Patenterteilung: **29.11.2017**
(21) Anmeldenummer: 14405030.9
(22) Anmeldetag: 09.04.2014
(51) Int. Cl.: B23C 5/10, B23C 5/00

(54) **Vollfräswerkzeug zur rotierenden Materialbearbeitung**
Solid milling tool for machining of materials
Outil de fraisage complet pour l'usinage rotatif de matériaux

(43) Veröffentlichungstag der Anmeldung: 14.10.2015
(73) Patentinhaber: Fraisa SA, 4512 Bellach (CH)
(72) Erfinder: Senn, Stefan, 3296 Arch (CH); Maushart, Josef, 4500 Solothurn (CH)
(74) Vertreter: Rüfenacht, Philipp Michael

(56) Entgegenhaltungen:
- EP-A2- 1 864 736
- EP-A2- 1 864 737
- WO-A1-2013/005307
- ES-A1- 2 288 397
- US-A1- 2003 118 411
- US-A1- 2004 120 777
- US-A1- 2006 045 637
- US-A1- 2006 188 346
- US-A1- 2009 232 610
- US-A1- 2010 209 200
- US-B1- 6 742 968

## Beschreibung

### Technisches Gebiet

Die Erfindung betrifft ein Vollfräswerkzeug zur rotierenden Materialbearbeitung mit einem länglichen Werkzeugschaft, welcher einen Arbeitsbereich aufweist, in welchem asymmetrisch mindestens drei helikale Schneiden mit zugehörigen Spanflächen angeordnet sind, wobei weiter bezüglich einer Drehrichtung hinter den Schneiden angeordnete Freiflächen vorhanden sind und wobei ein Kerndurchmesser im Arbeitsbereich ausgehend von einer Stirnseite des Vollfräswerkzeugs in axialer Richtung zunimmt. Ein derartiges Vollfräswerkzeug gemäß dem Oberbegriff des unabhängigen Anspruchs 1 ist aus dem Dokument WO 2013/005307 A bekannt.

### Stand der Technik

Fräswerkzeuge wie beispielsweise Schaftfräser weisen üblicherweise mehrere Zähne auf. Diese verlaufen um einen azimutalen Winkel zueinander versetzt jeweils wendelförmig um eine Längsachse des Fräsers. An jedem Zahn ist eine Schneide mit einer Spanfläche ausgebildet, welche das Spangut von der Schneide weg leitet. An jede Spanfläche schliesst sich unter einem Keilwinkel eine Freifläche an. Diese Freiflächen sind also bezüglich der Drehrichtung hinter den Schneiden angeordnet. Sie weisen gegenüber dem Rohlingkreisumfang, aus dem der Arbeitsbereich des Schaftfräsers herausgearbeitet ist, einen Freiwinkel auf. Das heisst, an den einzelnen Freiflächen sind die Werkzeugschneiden gegenüber dem Rohlingkreisumfang hinterschliffen, damit während der Fräsdrehung (Rotation) und des Fräsvorschubs (Translation) ein Festsetzen des Fräsers in dem Werkstück vermieden wird. Um ein Festsetzen sicher zu verhindern, muss die Freifläche gegenüber der Rohlingumfangsfläche einen gewissen Mindest-Freiwinkel aufweisen.

Um einen Kostenaufwand bei der Erneuerung eines Fräswerkzeugs zu verringern, sind Fräswerkzeuge und andere zur spanenden Bearbeitung von Werkstücken vorgesehene Werkzeuge häufig mit ein oder mehreren auswechselbaren Schneidplatten bestückt, die eine gewisse begrenzte Standzeit haben und von Zeit zu Zeit vergleichsweise einfach und kostengünstig ausgewechselt werden können. Schneidplatten weisen aber eine vergleichsweise geringe Fertigungspräzision auf. Ein bevorzugtes Anwendungsgebiet von Schneidplatten liegt daher im Bereich des Drehens, bei welchem das Werkzeug feststeht und somit vergleichsweise einfach und genau zu positionieren ist, während das Werkstück rotiert wird. Ein Schnitt des Werkzeugs wird dabei nicht laufend unterbrochen (wie es beim Fräsen der Fall ist), sondern es wird weitgehend kontinuierlich ein Span vom Werkstück abgezogen. Damit werden gänzlich andere Anforderungen an eine Werkzeugschneide gestellt, als beim Präzisionsfräsen. Bei einer rotierenden Materialbearbeitung, bei welcher das Werkzeug rotiert wird und das Werkstück feststeht, kommen schneidplattenbesetzte Werkzeuge daher beispielsweise hauptsächlich beim Schruppen bzw. bei vergleichsweise grober räumender Bearbeitung zur Anwendung, bei welcher keine besondere Präzision erforderlich ist. Für eine Präzisions- bzw. Feinbearbeitung von Werkstücken sind Fräswerkzeuge mit Schneidplatten nicht geeignet. Zudem müssen schneidplattenbesetzte Fräswerkzeuge eine gewisse Mindestgrösse bzw. -durchmesser aufweisen, damit die Schneidplatten aufgenommen bzw. gehalten werden können. Mögliche Durchmesser liegen dabei typischerweise oberhalb von ca. 16 mm. Der Einsatzbereich derartiger Werkzeuge ist damit neben der vergleichsweise geringen Präzision auch durch die Grösse der Werkzeuge eingeschränkt.

Für eine Präzisions- bzw. Feinbearbeitung kommen Vollfräswerkzeuge zur Anwendung, d. h. Fräswerkzeuge, bei welchen die spanabhebenden Schneiden am Werkzeugkörper selbst ausgebildet sind. Vollfräswerkzeuge können auf allen Grössenskalen z. B. aus Schnellarbeitsstahl (HSS) sowie aus Hartmetall, Keramik oder Cermet sowie aus sämtlichen weiteren bekannten Materialien für Fräswerkzeuge gefertigt sein. Verschlissene Schneiden an Vollfräsern können durch Nachschleifen für den weiteren Gebrauch aufgearbeitet werden. Ist dies nicht mehr möglich, muss das gesamte Werkzeug entsorgt werden. Eine Verlängerung der Standzeit bzw. eine Verbesserung der Verschleisseigenschaften von Vollfräswerkzeugen ist daher besonders wünschenswert.

Eine bekannte Massnahme zur Verbesserung der Stabilität eines Vollfräswerkzeugs stellt ein von der Stirnseite in axialer Richtung nach hinten zunehmender Kerndurchmesser dar. Ein entsprechendes Fräswerkzeug ist beispielsweise in der US 6,742,968 (Kennametal Inc.) gezeigt. Parallel zum zunehmenden Kerndurchmesser nimmt die Zahntiefe ab, bei einem der dargestellten Ausführungsbeispiele gilt dies auch für die Nutbreite.

Für eine präzise Bearbeitung und eine hohe Standzeit der Werkzeuge ist es ferner wichtig, dass bei deren Einsatz möglichst wenig störende Vibrationen auftreten. Ein Mittel, um derartige Vibrationen zu reduzieren, ist eine asymmetrische Anordnung bzw. Ausbildung der helikalen Schneiden. Die Asymmetrie ergibt sich insbesondere aus einem ungleichen azimutalen Versatz der einzelnen Schneiden, also einer ungleichen Zahnteilung, und/oder unterschiedlichen Drallwinkeln der einzelnen Schneiden. So zeigt z. B. die EP 2 288 397 B1 (Herramientos de Amorebieta, S. A. L.) ein rotierendes Zerspanungswerkzeug, z. B. einen Fräser, mit mehreren Schneiden, wobei der Helixwinkel entlang mindestens einer der Schneiden kontinuierlich variiert und wobei sowohl der Helixwinkel als auch dessen Variation bei den verschiedenen Schneiden unterschiedlich ist.

Sowohl der ausgehend von der Stirnseite zunehmende Kerndurchmesser als auch die asymmetrische Ausbildung bzw. Anordnung der Schneiden wirken sich auf die Geometrie der Spannuten aus. Namentlich nimmt der Querschnitt der Spannuten aufgrund des grösser werdenden Kerns in axialer Richtung nach hinten ab, und je nach individueller Geometrie des einzelnen Zahns ergibt sich eine weitere Beeinflussung der Spannutgeometrie. Damit die Abführung der Späne nicht beeinträchtigt wird, müssen oft Kompromisse bei der Ausgestaltung der Asymmetrie oder beim Anstieg des Kernquerschnitts gemacht werden.

### Darstellung der Erfindung

Aufgabe der Erfindung ist es, ein dem eingangs genannten technischen Gebiet zugehörendes Vollfräswerkzeug zur rotierenden Materialbearbeitung zu schaffen, welches eine hohe Standzeit und einen vibrationsarmen Lauf bei guter Spanabführung aufweist.

Die Lösung der Aufgabe ist durch die Merkmale des Anspruchs 1 definiert. Gemäss der Erfindung ist zumindest in einem stirnseitigen Abschnitt des Arbeitsbereichs pro Schneide mindestens eine vordere Freifläche vorhanden, welche der Schneide benachbart ist, und eine hintere Freifläche, welche einer Spanfläche einer nachfolgenden Schneide benachbart ist, wobei bei mindestens einer der Schneiden eine Breite der hinteren Freifläche ausgehend von der Stirnseite des Vollfräswerkzeugs abnimmt.

Als Kerndurchmesser wird wie üblich der Durchmesser der grössten kreisförmigen Fläche verstanden, deren Zentrum mit der Längsachse des Werkzeugs zusammenfällt und deren Fläche vollständig innerhalb des Werkzeugquerschnitts liegt.

Der Kerndurchmesser muss nicht über den gesamten Arbeitsbereich zunehmen, es können insbesondere erste Abschnitte vorhanden sein, in welchen der Kerndurchmesser konstant ist und zweite Abschnitte, in welchen der Kerndurchmesser in axialer Richtung nach hinten zunimmt.

Die Asymmetrie der Schneidkanten bzw. von deren Anordnung bringt eine starke Reduktion der Vibrationen mit sich, was einen präzisen und sanften Schnitt ermöglicht. Die Zunahme des Kerndurchmessers ermöglicht die Fertigung eines Werkzeugs mit hoher Steifigkeit. Aufgrund der Kombination dieser Massnahmen werden die Standzeit und die Handhabbarkeit des Werkzeugs erhöht. Ferner reduziert sich bei gegebener Abtragsleistung auch die benötigte Antriebsleistung der Fräsmaschine.

Die vordere Freifläche grenzt an die Schneide bzw. den unmittelbaren Schneidenbereich an und hat eine vorgegebene Geometrie, insbesondere einen vorgegebenen Freiwinkel und eine vorgegebene Facettenbreite, die den Erfordernissen des Fräsprozesses hinsichtlich Stabilität im Schneidenbereich, Werkzeugsteifigkeit und Vibrationsverhalten angepasst ist.

Die hintere Freifläche grenzt an die Spanfläche der nachfolgenden Schneide an, es handelt sich also um die letzte Freifläche, bevor die Aussenfläche des Werkzeugs in die Spannut übergeht. Der Freiwinkel der hinteren Freifläche, d. h. der Winkel zwischen der hinteren Freifläche und einer tangentialen Fläche an den durch die Schneidkanten aufgespannten Zylinder, ist grösser als der Freiwinkel der vorderen Freifläche. In der Regel ist der Übergang zwischen hinterer Freifläche und Spanfläche sehr ausgeprägt, in einem senkrecht zur Längsachse des Werkzeugs liegenden Querschnitt ergibt sich entsprechend ein Knick, denn in der Regel betragen die Freiwinkel der Freiflächen maximal 45°, oft weniger als 40°, während im Bereich der Spannut der entsprechende Winkel deutlich grösser ist als 45°. Ferner ist ein Krümmungsradius der leicht konkaven Freiflächen, verursacht durch die Bearbeitung mit einer Schleifscheibe, in der Regel mehrfach grösser als die Krümmungsradien der (ebenfalls konkaven) Spannut. Als Breite der Freifläche wird ein Abstand verstanden, welcher sich in dem senkrecht zur Längsachse des Werkzeugs orientierten Querschnitt zwischen einem Übergang von der Schneidkante bzw. einer vorangegangenen Freifläche zur betrachteten Freifläche und einem Übergang von der betrachteten Freifläche zur nächsten Freifläche oder zur Spanfläche ergibt.

Die Abnahme der Breite mindestens einer der hinteren Freiflächen schafft einen zusätzlichen Freiheitsgrad bei der Fertigung der Spannut, indem der Übergang zwischen dem Freiflächenbereich und der Spannut variabel ausgebildet ist und sich von Schneide zu Schneide unterscheiden kann. Die Geometrie der Spannut, insbesondere die Spannutbreite, kann dadurch im Hinblick auf eine zuverlässige Abführung des Spans zusätzlich und schneidenspezifisch optimiert werden, namentlich bei Schneiden, bei welchen aufgrund der Asymmetrie und sekundär auch des Kerndurchmesserzuwachses der für das Einbringen der Spannut zur Verfügung stehende Raum eingeschränkt ist. Alle Spannuten können somit trotz Asymmetrie so ausgebildet werden, dass ein optimaler Spanfluss mit reduzierter Adhäsion und Reibung erreicht wird, dies auch bei schwer zerspanbaren Werkstoffen wie z. B. (korrosionsbeständigen) Nickelbasislegierungen, Edelbaustählen, Hartmanganstählen, Schnellarbeitsstählen (HSS), hochwarmfesten Legierungen usw. und bei grosser axialer und/oder radialer Eintauchtiefe. Durch eine sichere Spanabfuhr werden die thermische und mechanische Belastung des Werkzeugs reduziert, und die Gefahr schockartiger Einwirkungen durch Verklemmen eines Spans, welche zur Zerstörung des Werkzeugs führen können, wird minimiert. Insgesamt ergeben sich eine höhere mögliche Schneidleistung und eine bessere Standzeit. Versuche haben gezeigt, dass gegenüber bekannten Designs die Abtragsleistungen verdoppelt werden können. Die Verlängerung der Standzeit ist zudem insofern von zentralem Interesse, als dies aufgrund einer Reduktion der nötigen Werkzeugkontrollen und -wechsel eine höhere Automatisierbarkeit des Gesamtprozesses erlaubt.

Die Breite der hinteren Freifläche muss nicht über den gesamten Arbeitsbereich abnehmen, es können insbesondere erste Abschnitte vorhanden sein, in welchen die Breite konstant ist und zweite Abschnitte, in welchen die Breite in axialer Richtung nach hinten abnimmt.

Die Erfindung ist anwendbar zumindest bei Vollfräswerkzeugen mit einer Schneidenzahl von 3-6, insbesondere 4-6. Das Werkzeug ist mit Vorteil aus Voll-Hartmetall hergestellt. Es kann eine Beschichtung aufweisen.

Mit Vorteil beträgt eine erste Abnahme der Breite einer hinteren Freifläche einer ersten der Schneiden maximal 65% einer zweiten Abnahme der Breite einer hinteren Freifläche einer zweiten der Schneiden. Mit Abnahme wird hier ein Unterschied zwischen einer Breite der jeweiligen hinteren Freifläche an deren axial vorderen Ende, d. h. im stirnseitigen Abschnitt, und einer Breite der Freifläche an deren axial hinteren Ende, d. h. am hinteren Ende des Arbeitsbereichs, verstanden. Die Geometrien der hinteren Freiflächen unterscheiden sich somit in Bezug auf verschiedene Schneiden recht stark, was bedeutet, dass für die Gestaltung der Geometrie der dahinter liegenden Spannuten trotz der durch die Asymmetrie und den Zuwachs des Kerndurchmessers grösstmögliche Freiheiten geschaffen werden können.

Bei einer bevorzugten Ausführungsform umfasst mindestens eine der Schneiden eine hintere Freifläche, deren Breite entlang des Arbeitsbereichs konstant ist. Eine oder mehrere der weiteren Schneiden umfassen hingegen eine hintere Freifläche, deren Breite ausgehend von der Stirnseite des Vollfräswerkzeugs abnimmt. Eine Anpassung der eigentlich optimalen, vorgegebenen Freiflächengeometrie ist bei dieser Ausführungsform somit nur in gewissen Fällen notwendig, welche durch die Asymmetrie der Schneidengestaltung, insbesondere hinsichtlich Zahnteilung und Drallwinkel, bedingt sind.

Es sind andere Ausführungsformen möglich, bei welchen die Breite aller hinteren Freiflächen abnehmend ausgestaltet ist. Die richtige Wahl hängt von der Art und dem Mass der Asymmetrie, dem Werkzeugdurchmesser und der Schneidenzahl ab.

Vorzugsweise beträgt eine Abnahme der Breite mindestens einer der hinteren Freiflächen mindestens 60% einer Breite der Freifläche an der Stirnseite des Vollfräswerkzeugs. Durch die Reduktion der Freiflächenbreite lässt sich so eine substanziell grössere Gestaltungsfreiheit für die Nutgeometrie erreichen.

Bei einer bevorzugten Ausführungsform ist in einem axial vorderen Abschnitt des Arbeitsbereichs eine erste Anzahl an Freiflächen bei allen Schneiden identisch, während in einem axial hinteren Abschnitt des Arbeitsbereichs mindestens eine der Schneiden die erste Anzahl an Freiflächen und mindestens eine andere der Schneiden eine zweite Anzahl an Freiflächen aufweist, welche kleiner ist als die erste Anzahl. Die Abnahme der Breite der hinteren Freifläche ist somit derart, dass die Freifläche an einer bestimmten axialen Position verschwindet und axial dahinter nicht mehr vorhanden ist. Die Anzahl der Freiflächen am Ende des Arbeitsbereichs ist also bei der betrachteten Schneide um eins geringer als im stirnseitigen Abschnitt. Die Abnahme kann sich gegebenenfalls sogar in die nächste Freifläche hinein fortsetzen, im Extremfall ist die Anzahl der Freiflächen am Ende des Arbeitsbereichs sogar um zwei (oder mehr) geringer als im stirnseitigen Abschnitt.

Die Reduktion der Anzahl der Freiflächen kann sich auf den Bereich hinter einer der Schneidkanten beschränken, oder es sind die Bereiche hinter mehreren oder allen Schneidkanten entsprechend ausgebildet.

Ein Verhältnis zwischen der stirnseitigen Breite der hinteren Freifläche, welche ausgehend von der Stirnseite des Vollfräswerkzeugs abnimmt, und der stirnseitigen Breite der benachbarten Freifläche beträgt mit Vorteil 0.75 - 1.25, insbesondere 0.85 - 1.15, d. h. die hinterste Freifläche hat im Bereich der Stirnseite ungefähr dieselbe Breite wie die nächstvordere Freifläche. Ein substanzieller Unterschied der Freiflächenbreite ergibt sich erst im Verlauf der Schneide.

Bevorzugt umfasst das erfindungsgemässe Vollfräswerkzeug mindestens eine weitere Freifläche, welche zwischen der vorderen Freifläche und der hinteren Freifläche mindestens einer der Schneiden angeordnet ist. Es sind also zu einer der Schneiden mindestens drei hintereinander angeordnete Freiflächen vorhanden. Die entsprechenden Freiwinkel nehmen ausgehend von der vorderen über die weitere bis zur hinteren Freifläche sukzessive zu.

Es können auch vier oder gar mehr Freiflächen vorhanden sein. Es hat sich gezeigt, dass durch die Anordnung mehrerer Freiflächen zu einer Schneide ein Werkzeug geschaffen werden kann, bei welchem sich der Bereich hinter der Schneide und damit der Schneidkeil insgesamt signifikant verstärken lässt. Dies reduziert die Torsion sowie unerwünschte Auslenkungen, so dass sich eine bestmögliche Zahnstabilität ergibt. Gleichzeitig kann hinsichtlich Vibrationsarmut eine bestmögliche Gestaltung der Freiflächen beibehalten werden, da der Einsatz einer grösseren Zahl von Freiflächen eine grössere Freiheit bei der Gestaltung der Geometrie ermöglicht, namentlich kann für jede Freifläche der Freiwinkel und die Breite abhängig von der jeweiligen Geometrie der davor liegenden Schneidkante und der dahinter liegenden Spannut individuell gewählt werden.

Die Anzahl der Freiflächen hängt insbesondere vom Werkzeugdurchmesser und von der Zähnezahl ab: Bei grösserem Durchmesser und kleinerer Zähnezahl wird die Anzahl der Freiflächen tendenziell höher gewählt als bei kleinerem Durchmesser bzw. grösserer Zähnezahl. Eine geeignete Anzahl von Freiflächen für verschiedene Durchmesser und Zähnezahlen ist in der folgenden Tabelle angegeben:

| | **Zähnezahl** | | | |
|---|---|---|---|---|
| **d1 [mm]** | **3** | **4** | **5** | **6** |
| **6** | 4 | 3 | 3 | 2 |
| **10** | 4 | 4 | 3 | 3 |
| **16** | 4 | 4 | 3 | 3 |

Insbesondere bei Werkzeugen mit hoher Zähnezahl und/oder geringem Durchmesser können also auch nur zwei Freiflächen vorhanden sein.

Angrenzend an die Stirnseite sind die Breiten der Freiflächen mit Vorteil jeweils ungefähr in demselben Grössenbereich, d. h. diese Breiten betragen 0.75B - 1.25B, wobei B eine vorgegebene Anfangsbreite bezeichnet.

Es hat sich gezeigt, dass besonders gute Eigenschaften hinsichtlich Vibrationsdämpfung (axial und radial) und ein besonders ruhiger Lauf resultieren, wenn ein Drallwinkel der mindestens drei helikalen Schneiden im Arbeitsbereich ausgehend von einer Stirnseite des Vollfräswerkzeugs zunimmt. Dies liegt keineswegs nahe, weil eine Lehrmeinung besagt, dass der Drallwinkel nach hinten abnehmen sollte, damit der Span mit möglichst wenig Widerstand von der Spannut aufgenommen werden kann, eine derartige Geometrie mit abnehmenden Drallwinkeln ist auf dem Markt denn auch bekannt.

Alternativ können Schneiden mit konstantem Drallwinkel zum Einsatz gelangen.

Bevorzugt ist ein erster Drallwinkel einer ersten der mindestens drei helikalen Schneiden mindestens 2° grösser als ein zweiter Drallwinkel einer zweiten der mindestens drei helikalen Schneiden. Die Drallwinkel der verschiedenen Schneiden unterscheiden sich also massgeblich. Auch diese Auslegung trägt zu einem vibrationsarmen Lauf des Fräswerkzeugs bei.

Bevorzugt ist eine Zahnteilung ungleich, d. h. der azimutale Versatz benachbarter Schneiden ist von Schneide zu Schneide unterschiedlich. Beispielsweise beträgt der Versatz bei einem Fräswerkzeug mit vier Schneiden zwischen ca. 85 und 95°. Durch diese spezifische Asymmetrie lassen sich Vibrationen, die aufgrund von Resonanzen auftreten würden, wirkungsvoll verhindern. Der unterschiedliche Versatz hat zur Folge, dass sich der zur Verfügung stehende Raum zwischen benachbarten Schneiden recht stark unterscheidet. Die erfindungsgemässe Ausgestaltung der Freiflächen ermöglicht es, auch bei beengten Raumverhältnissen Spannuten mit einer für die Spanführung bestmöglichen Geometrie einzubringen.

Alternativ wird eine gleichmässige Zahnteilung mit einem Abstand von 360°/Z verwendet. Die Reduktion der Vibrationen erfolgt dann insbesondere mittels unterschiedlicher Drallwinkel.

Bei einer bevorzugten Ausführungsform eines Schaftfräsers mit vier Schneiden sind beispielsweise folgende Eigenschaften kombiniert:
a. der Kerndurchmesser nimmt ausgehend von der Stirnseite des Werkzeugs zu, insbesondere wächst er verglichen mit dem Kerndurchmesser im stirnseitigen Bereich bis zum axial hinteren Ende der Schneide auf das 1.1-1.2fache an;
b. es ist eine ungleiche Zahnteilung vorhanden, wobei ein azimutaler Abstand zwischen einer ersten Schneide und einer zweiten Schneide sowie zwischen einer dritten und einer vierten Schneide grösser sind als 90°, während die azimutalen Abstände zwischen der zweiten und der dritten bzw. der vierten und der ersten Schneide kleiner sind als 90°;
c. der Drallwinkel der zweiten Schneide ist geringer als derjenige der ersten und dritten Schneide, der Drallwinkel der vierten Schneide ist grösser als derjenige der ersten und dritten Schneide;
d. die Drallwinkel wachsen ausgehend von der Stirnseite des Werkzeugs im Wesentlichen linear und alle mit derselben Steigerungsrate an;
e. jede Schneidkante weist in Abhängigkeit des Werkzeugdurchmessers gemäss der obigen Tabelle 3 oder 4 Freiflächen auf, wobei die Breite der letzten Freifläche bei der ersten und zweiten Schneide konstant ist, bei der dritten und vierten Schneide aber ausgehend von der Stirnseite des Werkzeugs abnimmt.

Besonders bevorzugt nimmt bei dieser Ausführungsform die Breite der letzten Freifläche der dritten Schneide entlang der Schneide auf 50-70% der Anfangsbreite im stirnseitigen Bereich ab, und die Breite der letzten Freifläche der vierten Schneide nimmt entlang der Schneide auf 10-40% der Anfangsbreite ab.

Ebenfalls besonders bevorzugt nimmt der Grundradius der Spannuten ausgehend von der Stirnseite des Werkzeugs entlang der Schneiden auf 60-80% des Grundradius im stirnseitigen Bereich ab.

Eine analoge Geometrie ist auch bei einem Schaftfräser mit fünf Schneiden einsetzbar, wobei sich natürlich die azimutalen Abstände auf mehr bzw. weniger als 72° reduzieren.

Bei einer bevorzugten Ausführungsform umfasst der Arbeitsbereich mindestens einen ersten Abschnitt und mindestens einen axial hinten an den ersten Abschnitt angrenzenden zweiten Abschnitt. In beiden Abschnitten nimmt in axialer Richtung nach hinten der Kerndurchmesser zu, wobei eine Rate einer Änderung des Kerndurchmessers im gesamten ersten Abschnitt geringer ist als die Rate der Änderung des Kerndurchmessers im gesamten zweiten Abschnitt. Insbesondere verläuft die Änderung im gesamten ersten Abschnitt gemäss einer konstanten ersten Rate und im gesamten zweiten Abschnitt gemäss einer konstanten zweiten Rate, wobei die zweite Rate grösser ist als die erste Rate. Es sind aber auch kontinuierlich veränderliche Raten möglich, und es kann ein Abschnitt mit konstantem Kerndurchmesser sowohl hinten als auch vorne an einen Abschnitt mit zunehmendem Kerndurchmesser grenzen.

Es hat sich gezeigt, dass sich mit einer derartigen Kerngeometrie eine gute Spanführung mit einer hohen Werkzeugsteifigkeit verbinden lässt. Die hohe Steifigkeit ermöglicht die Aufnahme wesentlich höherer Biege-, Torsions- und Zugspannungen und reduziert die Auslenkung des Werkzeugs. Es ergibt sich daraus eine höhere Leistungsfähigkeit im Bereich der axialen und radialen Zustellung und des Vorschubs.

Mit Vorteil erfolgt der Übergang zwischen dem ersten Abschnitt und dem zweiten Abschnitt bei einer axialen Position, die ausgehend von der Stirnseite 75 - 90% der (axialen) Schneidenlänge entspricht. Der Kerndurchmesser beträgt an der Übergangsstelle bevorzugt 103 - 112% des Kerndurchmessers an der Stirnseite, am Ende der Schneide 110 - 120% des Kerndurchmessers an der Stirnseite.

Alternativ ist die Änderungsrate über den gesamten Arbeitsbereich konstant. Es ist grundsätzlich auch denkbar, dass Abschnitte vorhanden sind, bei welchen der Kerndurchmesser in axialer Richtung nach hinten abnimmt.

Mit Vorteil ist an den mindestens drei Schneiden auf der zugehörigen Spanfläche eine Schutzfase ausgebildet, d. h. die Spanfläche der jeweiligen Schneide weist angrenzend an die Schneide eine Abfasung auf, welche weitgehend parallel zur zugehörigen Schneide ausgebildet ist. Diese Abfasung weist gegenüber der davorliegenden Spanfläche einen Winkel auf. Der Schutzfasenwinkel zwischen der Schutzfase und einer radialen Ebene, welche durch die Schneidkante verläuft, beträgt mit Vorteil zwischen -10° und +2°, bevorzugt zwischen -5° und +1°, während der Nominal-Spanwinkel -20° bis +15°, insbesondere -5° bis +5°, beträgt. Die konkreten Winkel werden insbesondere in Abhängigkeit des zu bearbeitenden Materials gewählt. Die Schutzfasenbreite beträgt bei gängigen Werkzeugdurchmessern von 6-20 mm 0.05 - 0.4 mm, bevorzugt 0.1-0.3 mm. Es hat sich gezeigt, dass mit Hilfe dieser Schutzfase die Stabilität des Schneidkeils und damit die Leistungsfähigkeit und die Standzeit weiter erhöht werden können.

Bevorzugt gehen die vorderen Freiflächen über Schneidenflächen in die Spanflächen über, wobei die Schneidflächen gewölbt sind, so dass die so gebildeten Schneidkanten eine Schneidkantenverrundung aufweisen. Ein Krümmungsradius in diesem Bereich beträgt insbesondere ca. 0.005 - 0.015 mm, wobei die Krümmung bezüglich des Schneidkeils im Wesentlichen konvex, d. h. nach aussen gewölbt, ist. Derartig verrundete Schneidkanten haben den Vorteil, dass sie bei einem Verschleiss nicht ausbrechen wie scharfe Schneidkanten und aufgrund der sich ergebenden Schartigkeit den weiteren Verschleiss ungünstig beeinflussen. Vielmehr kommt es aufgrund der Verrundung zu einem gleichmässigeren Abnutzen d. h. zu einem gleichmässigen Verschleiss der Schneiden, was gesamthaft eine geringere Verschleissrate und damit eine erhöhte Standzeit ergibt. Zudem kann die mechanische Belastung gesteigert werden indem höhere Schnittdaten (Zustellung, Geschwindigkeit) gewählt werden. Entsprechend wird die Produktivität gesteigert. Insbesondere können dabei vorzugsweise alle Schneidkanten verrundet sein oder aber es weist nur eine Teilmenge der am Werkzeug ausgebildeten Schneiden, insbesondere aber wenigstens eine Schneide, die Kantenverrundung auf.

Es ist nicht erforderlich, dass die Freiflächen und/oder die Spanflächen bzw. zugehörige Abfasungen tangential und glatt in die gekrümmten Schneidenflächen übergehen. Es können durchaus auch Ausführungsformen vorteilhaft sein, bei welchen der Krümmungsradius der Schneidenflächen im Vergleich zu einer Breite der Schneidenflächen gross ist, derart, dass die Schneidenflächen kantig in die angrenzenden Flächenabschnitte übergehen.

Grundsätzlich sind auch Varianten von Schneidkanten denkbar, bei welchen sich eine Schneidengeometrie beispielsweise durch Abfasen einer scharfen Schneidkante ergibt, d. h. die Schneidenflächen ebene Flächen sind. Die Schneidenflächen stossen in diesem Fall beispielsweise in jeweils einer gemeinsamen Kante an die zugehörige Freifläche und Spanfläche.

Vollfräswerkzeuge können unterschiedliche Geometrien aufweisen. Ein Werkzeug, welches sowohl für die Bearbeitung in axialer als auch in radialer und in kombiniert axial-radialer Richtung geeignet ist, ist der Eckradius-Schaftfräser. Dieser wird in Bauteilen mit verrundeten Innenkanten, z. B. entsprechenden Integralbauteilen, verwendet. Es handelt sich dabei um ein Werkzeug mit einem länglichen Werkzeugschaft, welcher einen Arbeitsbereich aufweist, in welchem Schneiden mit zugehörigen Spanflächen vorhanden sind, wobei jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich umfasst. Die Geometrie des Eckradius-Schaftfräsers wird so gewählt, dass beim Fräsen sanfte Übergänge im Werkstück erzeugt werden können. Derartige Eckradius-Schaftfräser mit einem Eckradius r in einem grossen Radiusbereich, 0.02d < r < 0.4d, lassen sich auch mit der erfindungsgemässen Geometrie erzeugen.

Wenn scharfe Innenkanten zu erzeugen sind, wird hingegen üblicherweise ein zylindrischer Schaftfräser eingesetzt. Bei einem solchen Werkzeug stossen am Übergang auf die Stirnseite die Haupt- und die Nebenschneiden unter einem Winkel von 90° aufeinander, der Eckbereich ist üblicherweise unter einem Winkel von 45° abgefast. Bei einer bevorzugten Ausführungsform umfasst jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich, wobei für einen Eckradius r des Radiusbereichs für ein Vollfräswerkzeug mit einem Durchmesser d folgende Beziehung gilt: 0.01 d < r < 0.03 d. Der Radiusbereich ist also nicht grösser als die üblicherweise verwendete Fase. Es ergibt sich also ein "quasizylindrischer" Eckradius-Schaftfräser. Es lassen sich damit scharfe Innenkanten erzeugen, trotzdem ergeben sich gegenüber "echten" zylindrischen Schaftfräsern aufgrund einer verbesserten Eckenstabilität eine verbesserte Handhabung und eine erhöhte Standzeit.

Das Fräswerkzeug weist axiale Übergänge auf, namentlich zwischen dem Arbeitsbereich und einem hinten anschliessenden Halsbereich sowie zwischen dem Halsbereich und einem wiederum hinten anschliessenden Schaftbereich. Generell findet bei diesen Übergängen eine Änderung im Werkzeugdurchmesser statt. Es ist vorteilhaft, wenn diese Übergänge nicht abrupt erfolgen, sondern wenn sie über zu- bzw. auseinanderlaufende Übergangsflächen erfolgen, die konisch oder gerundet ausgebildet sind; die Kanten zwischen den konischen Übergangsflächen und den benachbarten Bereichen sind zudem mit Vorteil abgerundet. Es hat sich gezeigt, dass durch eine derartige Geometrie die Biegebruchfestigkeit bei den entsprechenden Übergängen substanziell erhöht werden kann, was eine höhere Leistungsfähigkeit und Werkzeug-Lebensdauer ermöglicht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein Schrägbild einer Ausführungsform eines erfindungsgemässen Vollfräswerkzeugs;
- Fig. 2: eine vereinfachte Seitenansicht des Werkzeugs mit Angabe der Drallwinkel;
- Fig. 3A: eine Draufsicht auf die Stirnseite des Werkzeugs;
- Fig. 3B: eine Detailansicht eines Bereichs der Figur 3A mit Angabe der Breite der Freiflächen;
- Fig. 4: eine Darstellung der Schneidengeometrie;
- Fig. 5: den Verlauf der Drallwinkel der Schneiden des erfindungsgemässen Werkzeugs;
- Fig. 6: den Verlauf des Kerndurchmessers des erfindungsgemässen Werkzeugs;
- Fig. 7A-C: Querschnitte durch das vierschneidige erfindungsgemässe Werkzeug mit einem Durchmesser von 10 mm;
- Fig. 8A-C: Querschnitte durch ein vierschneidiges erfindungsgemässes Werkzeug mit einem Durchmesser von 6 mm;
- Fig. 9A-C: Querschnitte durch ein vierschneidiges erfindungsgemässes Werkzeug mit einem Durchmesser von 16 mm; und
- Fig. 10A-C: Querschnitte durch ein fünfschneidiges erfindungsgemässes Werkzeug mit einem Durchmesser von 12 mm.

Grundsätzlich sind in den Figuren gleiche Teile mit gleichen Bezugszeichen versehen.

### Wege zur Ausführung der Erfindung

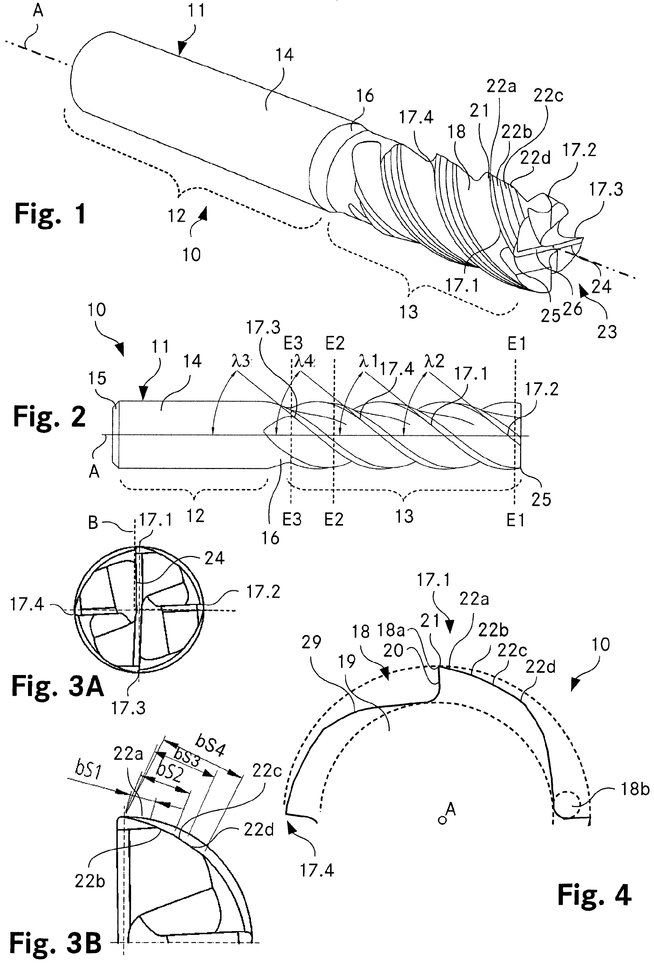

Die Figur 1 zeigt ein Schrägbild einer Ausführungsform eines erfindungsgemässen Vollfräswerkzeugs. In der Figur 2 ist eine vereinfachte Seitenansicht des Werkzeugs wiedergegeben, sie dient zur Angabe der Drallwinkel. Die Figur 3A zeigt eine Draufsicht auf die Stirnseite des Werkzeugs, in der Figur 3B ist eine Detailansicht des Bereichs B der Figur 3A wiedergegeben, ferner sind die Breiten der Freiflächen angegeben. Aus der Figur 4 ist die Schneidengeometrie des Werkzeugs ersichtlich.

Der Schaftfräser 10 ist einstückig aus Hartmetall gefertigt. Er weist einen im Wesentlichen kreiszylindrischen Grundkörper 11 mit einer Längsachse A auf. Der Nominaldurchmesser des beispielhaft in den Figuren 1 - 4 gezeigten Grundkörpers beträgt 10 mm. Der Grundkörper 11 ist dabei in seiner Längsrichtung in einen Haltebereich 12, einen Übergangsbereich 16 und einen Arbeitsbereich 13 gegliedert. Der Haltebereich 12 ist als kreiszylindrischer Schaft 14 ausgebildet, welcher beispielsweise in einem entsprechenden Futter einer Fräsmaschine aufgenommen und gehalten werden kann. Zum vereinfachten Einbringen in ein Spannmittel weist der Schaft 14 am haltebereichsseitigen (proximalen) Längsende des Grundkörpers 14 eine Abfasung 15 auf.

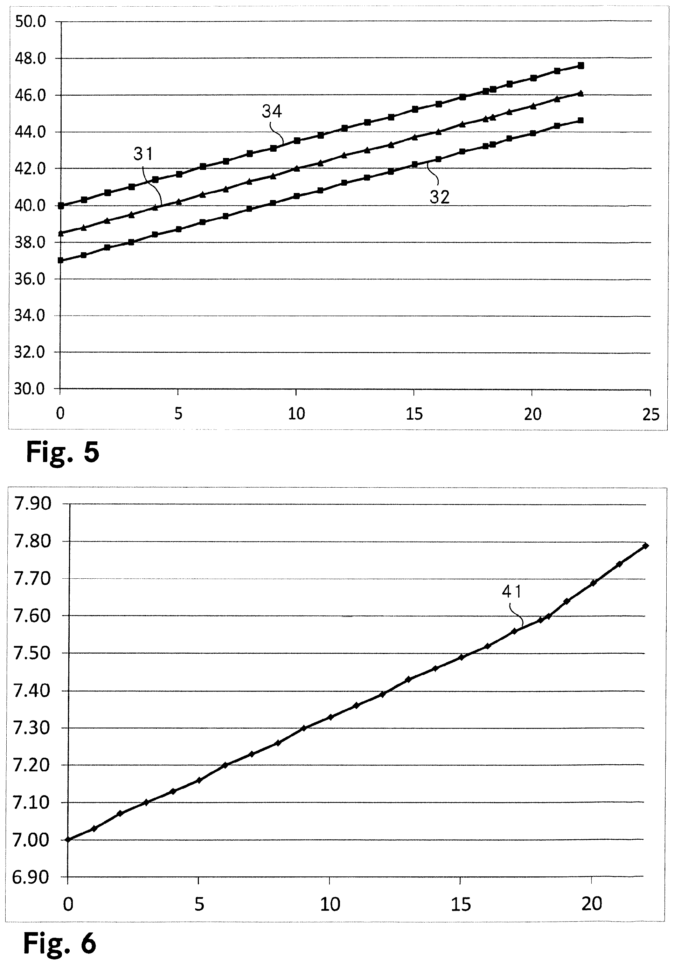

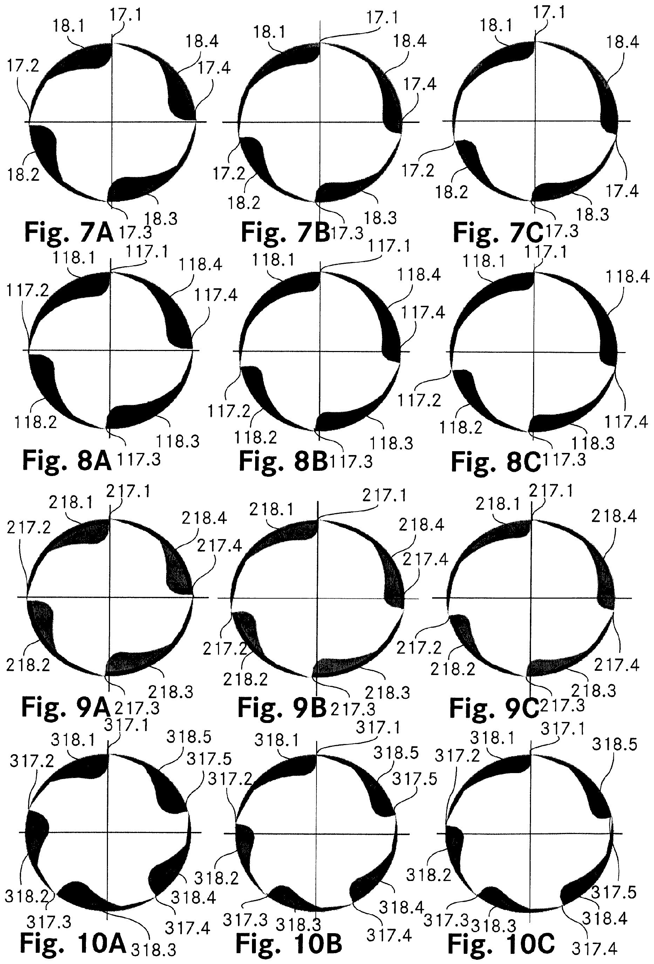

Distal an den Haltebereich 12 schliesst sich der Übergangsbereich 16 an, in welchem sich der kreisförmige Querschnitt des Schaftfräsers 10 in distaler Richtung leicht reduziert. An den Übergangsbereich 16 schliesst sich wiederum distal der Arbeitsbereich 13 an. Seine Länge beträgt 26 mm. Der Arbeitsbereich 13 ist in an sich bekannter Weise mit einer Hartstoffbeschichtung versehen. Im Arbeitsbereich 13 sind vier helikal verlaufende Schneidzähne 17.1, 17.2, 17.3, 17.4 ausgebildet. Die Schneidenlänge beträgt beim dargestellten Werkzeug axial von der Stirnseite her gemessen 22 mm. Die Drallwinkel λ1, λ2, λ3, λ4 der einzelnen Schneidzähne 17.1...4 (vgl. Figur 2) sind unterschiedlich und steigen ausgehend von der Stirnseite des Schaftfräsers 10 an, dies ist unten, im Zusammenhang mit der Figur 5, näher beschrieben. Auch die Zahnteilung ist ungleich, die entsprechenden Winkel betragen 0° für den ersten Schneidzahn 17.1, 92.2° für den zweiten Schneidzahn 17.2, 177.1° für den dritten Schneidzahn 17.3 und 272.3° für den vierten Schneidzahn 17.4 (vgl. auch Figuren 7A-C).

Im Folgenden wird exemplarisch der Schneidzahn 17.1 beschrieben, wobei sich von diesem die weiteren Schneidzähne 17.2...4 wie unten beschrieben durch deren azimutal versetzte Anordnung am Schaftfräser 10, durch die unterschiedlichen Drallwinkel und die Freiflächen- sowie Spannutgestaltung unterscheiden. In Drehrichtung des Werkzeugs 10 ist vor dem Schneidzahn 17.1 eine Spannut 18 ausgestaltet. Eine Innenwandung der Spannut 18 umfasst dabei eine Spanfläche 20 des Schneidzahns 17.1 sowie eine Rückseite 29 des anderen Schneidzahns 17.4. Unmittelbar angrenzend an den Schneidzahn 17.1 umfasst die Spannut 18 eine Schutzfase 18a mit einem Winkel von 0° (d. h. radial verlaufend) und einer Breite von 0.2 mm. In Abhängigkeit der Tiefe der Spannuten 18 ergibt sich ein Kern 19 des Schaftfräsers 10 (vgl. Figur 4). Er definiert sich in der jeweiligen axialen Position als Kreisfläche grössten Durchmessers, deren Mittelpunkt auf der Längsachse A liegt und die vollständig im Material des Schaftfräsers 10 liegt. Der Verlauf des Kerndurchmessers ist unten, im Zusammenhang mit der Figur 6, näher beschrieben. Die Geometrie der Spannut 18 ist u. a. durch den Radius, den sog. Grundradius, eines Kreises 18b beschrieben, welcher sich an den Nutgrund anschmiegt. Der Grundradius beträgt an der Stirnseite 1.16mm, er sinkt bis zum Ende der Schneide an einer axialen Position von 22 mm im Wesentlichen linear auf 0.85 mm. An einer gegebenen axialen Position sind die Nuttiefen der vier Spannuten jeweils gleich, die sonstige Geometrie der Spannuten weist jedoch Unterschiede auf (vgl. auch unten, Fig. 7 - 10).

Eine radial am weitesten von der Längsachse A entfernte wendelförmige Kante am Schneidzahn 17.1 bildet eine Hauptschneide 21 des Werkzeugs 10. Diese weist eine Schneidkantenverrundung auf, wobei der Krümmungsradius im Bereich der Hauptschneide ca. 0.01 mm beträgt. Bezüglich der Drehrichtung hinter der Hauptschneide 21 sind aneinander anschliessend vier Freiflächen 22a, 22b, 22c, 22d ausgebildet, welche sich in der Mantelregion des Arbeitsbereichs 13 ausgehend von der Hauptschneide 21 insgesamt über ca. 30° in azimutaler Richtung erstrecken. Im Querschnitt senkrecht zur Längsachse A sind die vier Freiflächen 22a...d vier aneinander anschliessende gerade Linien, die mit einer Tangente an den Werkzeugumfang am Ort der Hauptschneide 21 jeweils einen so genannten Freiwinkel einschliessen. Die Freiwinkel der Freiflächen 22a...d sind entlang des Verlaufs des Schneidzahns 17.1 konstant und betragen für die erste, an die Hauptschneide 21 angrenzende Freifläche 22a 11°, für die nachfolgende zweite Freifläche 22b 20°, für die nachfolgende dritte Freifläche 22c 25° und für die letzte Freifläche 22d 37°. Ein radialer Abstand der Oberfläche der Freiflächen 22 von der Längsachse A nimmt also mit zunehmendem azimutalen Abstand von der Hauptschneide 21 stetig ab, wobei sich zwischen aufeinanderfolgenden Freiflächen ' 22a...d jeweils eine Änderung der entsprechenden Steigung ergibt. Die Breiten der ersten drei Freiflächen 22a, 22b, 22c sind entlang des Verlaufs des Schneidzahns 17.1 ebenfalls konstant, wobei die in der Figur 3B angegebenen Abstände von der Hauptschneide 21 folgende Werte annehmen: für den Übergang von der ersten Freifläche 22a zur zweiten Freifläche 22b bS1=0.4 mm, für den Übergang von der zweiten Freifläche 22b zur dritten Freifläche 22c bS2=1.1 mm und für den Übergang von der dritten Freifläche 22c zur letzten Freifläche 22d bS3=2.2 mm.

Die letzte Freifläche 22d ist bei den vier Schneidezähnen 17.1...4 unterschiedlich ausgebildet. Bei den ersten beiden Schneidezähnen 17.1, 17.2 ist ihre Breite im Wesentlichen konstant, ein Übergang zwischen der letzten Freifläche 22d und der Spannut 18 des darauffolgenden Schneidzahns 17.2, 17.3 liegt bei bS4=3.1 mm. Beim dritten Schneidzahn 17.3 entspricht die Breite der letzten Freifläche an der Stirnseite der Breite der letzten Freifläche 22d bei den ersten beiden Schneidezähnen 17.1, 17.2, reduziert sich aber entlang der Schneidkante des dritten Schneidzahns bis zu dessen hinteren Ende kontinuierlich um 40% der ursprünglichen Breite im stirnseitigen Bereich. Beim vierten Schneidzahn 17.4 entspricht die Breite der letzten Freifläche an der Stirnseite ebenfalls der Breite der letzten Freifläche 22d bei den ersten zwei Schneidezähnen 17.1, 17.2, reduziert sich aber entlang der Schneidkante des vierten Schneidzahns um 70% der ursprünglichen Breite im stirnseitigen Bereich.

An einem arbeitsbereichseitigen (distalen) Längsende 23 des Werkzeugs 10 ist stirnseitig, zur Hauptschneide 21 gehörig, eine Nebenschneide 24 ausgebildet, wobei die Spanfläche 20 auch als eine Spanfläche der Nebenschneide 24 wirkt. Die Nebenschneide weist gegenüber einer senkrecht auf der Längsachse A stehenden Fläche einen Hohlschliff von 2.5° auf. Die Hauptschneide 21 und die Nebenschneide 24 sind über einen Radiusübergang 25 miteinander verbunden, wobei die Schneiden derart ausgebildet sind, dass eine vom Mantelbereich über den Radius bis in die Stirnseite durchgängige, stufenlose Schneide gebildet wird. Der Krümmungsradius im Bereich des Radiusübergangs 25 beträgt im dargestellten Beispiel 0.2 mm.

Auch die Nebenschneide 24 und der Radiusübergang 25 weisen hinter der eigentlichen Schneidkante jeweils eine Freifläche 26 auf, wobei die Freifläche 26 durchgängig und stufenlos in die erste Freifläche 22a der Hauptschneide 21 übergeht.

Die Figur 5 zeigt den Verlauf der Drallwinkel der Schneiden des in den Figuren 1 - 4 dargestellten Werkzeugs. Wie bereits erwähnt, zeigen die vier Schneidzähne eine ungleiche Zahnteilung von 0°/92.2°/177.1°/272.3°. Die Verläufe der Drallwinkel λ1, λ3 des ersten Schneidzahns und des dritten Schneidzahns sind identisch. Sie sind durch die Kurve 31 wiedergegeben. Im stirnseitigen Bereich beträgt der entsprechende Drallwinkel 38.5°, er wächst dann im Wesentlichen linear bis zum Schneidenende auf 46.1° an. Der durch die Kurve 32 dargestellte Drallwinkel λ2 des zweiten Schneidzahns ist an jeweils derselben axialen Position durchwegs kleiner, er beträgt im stirnseitigen Bereich 37.0° und wächst bis zum Schneidenende im Wesentlichen linear auf 44.6° an. Der durch die Kurve 34 dargestellte Drallwinkel λ4 des vierten Schneidzahns ist durchwegs grösser als derjenige des ersten und dritten Schneidzahns an derselben axialen Position, er beträgt im stirnseitigen Bereich 40.0° und wächst bis zum Schneidenende im Wesentlichen linear auf 47.6° an.

Die Figur 6 zeigt den Verlauf des Kerndurchmessers eines erfindungsgemässen Werkzeugs. Dieser ist durch die Kurve 41 wiedergegeben. Er umfasst im Wesentlichen zwei lineare Abschnitte mit unterschiedlicher Steigung: An der Stirnseite beträgt der Kerndurchmesser des im Zusammenhang mit den Figuren 1 - 4 beschriebenen Fräswerkzeugs 7.00 mm, er wächst dann bis zu einer axialen Position von 18.3 mm im Wesentlichen linear auf 7.60 mm an. Im weiteren Verlauf wächst er mit einer grösseren Steigung bis zum Ende der Schneidkante bei einer axialen Position von 22.0 mm auf 7.79 mm an, anschliessend mit derselben Steigung bis zum Ende des Arbeitsbereichs 13 bei einer axialen Position von 26 mm auf 8.00 mm.

Die Figuren 7A-C zeigen Querschnitte durch das im Zusammenhang mit den Figuren 1 - 4 beschriebene erfindungsgemässe Werkzeug mit einem Nominaldurchmesser von 10 mm und den Schneidzähnen 17.1...4 und den dazugehörigen Spannuten 18.1...4. Die Figuren 8A-C zeigen im Vergleich Querschnitte durch ein vierschneidiges erfindungsgemässes Werkzeug mit einem Durchmesser von 6 mm und entsprechenden Schneidzähnen 117.1, 117.2, 117.3, 117.4 und dazugehörigen Spannuten 118.1, 118.2, 118.3, 118.4. Die Figuren 9A-C zeigen Querschnitte durch ein vierschneidiges erfindungsgemässes Werkzeug mit einem Durchmesser von 16 mm und entsprechenden Schneidzähnen 217.1, 217.2, 217.3, 217.4 und dazugehörigen Spannuten 218.1, 218.2, 218.3, 218.4. Die Figuren 10A-C zeigen Querschnitte durch ein fünfschneidiges erfindungsgemässes Werkzeug mit einem Durchmesser von 12 mm und entsprechenden Schneidzähnen 317.1, 317.2, 317.3, 317.4, 317.5 und dazugehörigen Spannuten 318.1, 318.2, 318.3, 318.4, 318.5. Die Querschnitte in den Figuren 7-10 sind jeweils so gedreht, dass der erste Schneidzahn oben, bei 0° liegt.

Die dargestellten Querschnitte erfolgen entlang der drei in der Figur 2 angedeuteten Schnittebenen: Die Figuren 7A, 8A, 9A, 10A zeigen einen Querschnitt im Bereich der Stirnseite, in einem axialen Abstand von 1 mm (Schnittebene E1-E1), die Figuren 7B, 8B, 9B, 10B zeigen einen Querschnitt im Bereich des Wechsels der Steigung des Kerndurchmessers (Schnittebene E2-E2), bei dem in den Figuren 1 - 4 dargestellten Werkzeug entspricht dies einer axialen Position von 18.3 mm. Die Figuren 7C, 8C, 9C, 10C zeigen einen Querschnitt am hinteren Ende der Schneidzähne (Schnittebene E3-E3), bei dem in den Figuren 1 - 4 dargestellten Werkzeug entspricht dies einer axialen Position von 22.0 mm.

In der folgenden Tabelle sind die axialen Positionen der Querschnitte sowie die entsprechenden Grundradien der Spannut angegeben:

| Figur | Zähnezahl Z | Durchmesser d1 | Schnitt | axiale Position | Grundradius |
|---|---|---|---|---|---|
| 7A | 4 | 10 mm | E1-E1 | 1.0 mm | 1.15mm |
| 7B | 4 | 10 mm | E2-E2 | 18.3 mm | 0.90 mm |
| 7C | 4 | 10 mm | E3-E3 | 22.0 mm | 0.85 mm |
| 8A | 4 | 6 mm | E1-E1 | 1.0 mm | 0.55 mm |
| 8B | 4 | 6 mm | E2-E2 | 10.8 mm | 0.47 mm |
| 8C | 4 | 6 mm | E3-E3 | 13.0 mm | 0.36 mm |
| 9A | 4 | 16 mm | E1-E1 | 1.0 mm | 1.65 mm |
| 9B | 4 | 16 mm | E2-E2 | 26.6 mm | 1.25 mm |
| 9C | 4 | 16 mm | E3-E3 | 32.0 mm | 1.15 mm |
| 10A | 5 | 12 mm | E1-E1 | 1.0 mm | 1.18 mm |
| 10B | 5 | 12 mm | E2-E2 | 21.6 mm | 0.92 mm |
| 10C | 5 | 12 mm | E3-E3 | 26.0 mm | 0.75 mm |

In den Figuren gut sichtbar sind die ungleiche Zahnteilung und die Änderungen der Geometrie welche sich aus den unterschiedlichen Drallwinkeln und Drallwinkelverläufen ergeben. Durch die oben beschriebene Anpassung der Freiflächengeometrie lässt sich aber trotz der unterschiedlichen Verhältnisse bei unterschiedlichen Schneidzähnen stets eine vorteilhafte Geometrie der Spannut erreichen.

Die Erfindung ist nicht auf die dargestellten Ausführungsbeispiele beschränkt. Insbesondere die Anzahl und Geometrie der Schneiden sowie die Dimensionen, insbesondere Radien, und Grössenverhältnisse der einzelnen Abschnitte des Werkzeugs können sich vom gezeigten Ausführungsbeispiel unterscheiden.

Zusammenfassend ist festzustellen, dass durch die Erfindung ein Vollfräswerkzeug zur rotierenden Materialbearbeitung geschaffen wird, welches eine hohe Produktivität und ein hohes Abtragsvolumen bei hoher Standzeit, vibrationsarmem Lauf und guter Spanabführung aufweist.

## Patentansprüche

1. Vollfräswerkzeug (10) zur rotierenden Materialbearbeitung mit einem länglichen Werkzeugschaft (11), welcher einen Arbeitsbereich (13) aufweist, in welchem asymmetrisch mindestens drei helikale Schneiden (17.1, 17.2, 17.3, 17.4) mit zugehörigen Spanflächen (20) angeordnet sind,
wobei weiter bezüglich einer Drehrichtung hinter den Schneiden angeordnete Freiflächen (22a, 22b, 22c, 22d) vorhanden sind und wobei ein Kerndurchmesser im Arbeitsbereich ausgehend von einer Stirnseite des Vollfräswerkzeugs in axialer Richtung zunimmt, **dadurch gekennzeichnet, dass** zumindest in einem stirnseitigen Abschnitt des Arbeitsbereichs pro Schneide mindestens eine vordere Freifläche (22a) vorhanden ist,
welche der Schneide benachbart ist, und eine hintere Freifläche (22d), welche einer Spanfläche einer nachfolgenden Schneide benachbart ist, wobei bei mindestens einer der Schneiden eine Breite der hinteren Freifläche (22d) ausgehend von der Stirnseite des Vollfräswerkzeugs abnimmt.

2. Vollfräswerkzeug nach Anspruch 1, **dadurch gekennzeichnet, dass** eine erste Abnahme der Breite einer hinteren Freifläche einer ersten der Schneiden maximal 65% einer zweiten Abnahme der Breite einer hinteren Freifläche einer zweiten der Schneiden beträgt.

3. Vollfräswerkzeug nach Anspruch 2, **dadurch gekennzeichnet, dass** mindestens eine der Schneiden eine hintere Freifläche umfasst, deren Breite entlang des Arbeitsbereichs konstant ist.

4. Vollfräswerkzeug nach einem der Ansprüche 1 bis 3, **dadurch gekennzeichnet, dass** eine Abnahme der Breite mindestens einer der hinteren Freiflächen mindestens 60% einer Breite der Freifläche an der Stirnseite des Vollfräswerkzeugs beträgt.

5. Vollfräswerkzeug nach Anspruch 4, **dadurch gekennzeichnet, dass** in einem axial vorderen Abschnitt des Arbeitsbereichs eine erste Anzahl an Freiflächen bei allen Schneiden identisch ist, während in einem axial hinteren Abschnitt des Arbeitsbereichs mindestens eine der Schneiden die erste Anzahl an Freiflächen und mindestens eine andere der Schneiden eine zweite Anzahl an Freiflächen aufweist, welche kleiner ist als die erste Anzahl.

6. Vollfräswerkzeug nach einem der Ansprüche 1 bis 5, **gekennzeichnet durch** mindestens eine weitere Freifläche, welche zwischen der vorderen Freifläche und der hinteren Freifläche mindestens einer der Schneiden angeordnet ist.

7. Vollfräswerkzeug nach einem der Ansprüche 1 bis 6, **dadurch gekennzeichnet, dass** ein Drallwinkel der mindestens drei helikalen Schneiden im Arbeitsbereich ausgehend von einer Stirnseite des Vollfräswerkzeugs zunimmt.

8. Vollfräswerkzeug nach einem der Ansprüche 1 bis 7, **dadurch gekennzeichnet, dass** ein erster Drallwinkel einer ersten der mindestens drei helikalen Schneiden mindestens 2° grösser ist als ein zweiter Drallwinkel einer zweiten der mindestens drei helikalen Schneiden.

9. Vollfräswerkzeug nach einem der Ansprüche 1 bis 8, **dadurch gekennzeichnet, dass** eine Zahnteilung ungleich ist.

10. Vollfräswerkzeug nach einem der Ansprüche 1 bis 9, **dadurch gekennzeichnet, dass** der Arbeitsbereich mindestens einen ersten Abschnitt umfasst und mindestens einen axial hinten an den ersten Abschnitt angrenzenden zweiten Abschnitt, wobei eine Rate einer Änderung des Kerndurchmessers im gesamten ersten Abschnitt geringer ist als die Rate der Änderung des Kerndurchmessers im gesamten zweiten Abschnitt.

11. Vollfräswerkzeug nach einem der Ansprüche 1 bis 10, **dadurch gekennzeichnet, dass** an den mindestens drei Schneiden auf der zugehörigen Spanfläche eine Schutzfase ausgebildet ist.

12. Vollfräswerkzeug nach einem der Ansprüche 1 bis 11, **dadurch gekennzeichnet, dass** die vorderen Freiflächen über Schneidenflächen in die Spanflächen übergehen, wobei die Schneidflächen gewölbt sind, so dass die so gebildeten Schneidkanten eine Schneidkantenverrundung aufweisen.

13. Vollfräswerkzeug nach einem der Ansprüche 1 bis 12, **dadurch gekennzeichnet, dass** jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich umfasst, wobei für einen Eckradius r des Radiusbereichs für ein Vollfräswerkzeug mit einem Durchmesser d folgende Beziehung gilt: 0.005 d < r < 0.04 d.

## Claims

1. Solid milling tool (10) for rotary material machining, having an elongate tool shank (11) which has a working region (13) in which at least three helical lips (17.1, 17.2, 17.3, 17.4) having associated rake faces (20) are arranged in an asymmetric manner, wherein flanks (22a, 22b, 22c, 22d) arranged behind the lips with regard to a direction of rotation are also provided and wherein a core diameter in the working region increases in an axial direction starting from an end side of the solid milling tool, **characterized in that** at least one front flank (22a), which is adjacent to the lip, and a rear flank (22d), which is adjacent to a rake face of a subsequent lip, are provided per lip at least in an end-side portion of the working region, wherein in the case of at least one of the lips, a width of the rear flank (22d) decreases starting from the end side of the solid milling tool.

2. Solid milling tool according to Claim 1, **characterized in that** a first decrease in the width of a rear flank of a first of the lips amounts to at most 65% of a second decrease in the width of a rear flank of a second of the lips.

3. Solid milling tool according to Claim 2, **characterized in that** at least one of the lips comprises a rear flank, the width of which is constant along the working region.

4. Solid milling tool according to one of Claims 1 to 3, **characterized in that** a decrease in the width of at least one of the rear flanks amounts to at least 60% of a width of the flank on the end side of the solid milling tool.

5. Solid milling tool according to Claim 4, **characterized in that**, in an axially front portion of the working region, a first number of flanks are identical in the case of all the lips, while, in an axially rear portion of the working region, at least one of the lips has the first number of flanks and at least one other of the lips has a second number of flanks, which is smaller than the first number.

6. Solid milling tool according to one of Claims 1 to 5, **characterized by** at least one further flank which is arranged between the front flank and the rear flank of at least one of the lips.

7. Solid milling tool according to one of Claims 1 to 6, **characterized in that** an angle of twist of the at least three helical lips increases in the working region starting from an end side of the solid milling tool.

8. Solid milling tool according to one of Claims 1 to 7, **characterized in that** a first angle of twist of a first of the at least three helical lips is at least 2° greater than a second angle of twist of a second of the at least three helical lips.

9. Solid milling tool according to one of Claims 1 to 8, **characterized in that** a tooth pitch is irregular.

10. Solid milling tool according to one of Claims 1 to 9, **characterized in that** the working region comprises at least a first portion and at least a second portion adjoining the first portion axially towards the rear, wherein a rate of change in the core diameter throughout the first portion is less than the rate of change in the core diameter throughout the second portion.

11. Solid milling tool according to one of Claims 1 to 10, **characterized in that** a protective chamfer is formed on the at least three lips, on the associated rake face.

12. Solid milling tool according to one of Claims 1 to 11, **characterized in that** the front flanks transition via cutting faces into the rake faces, wherein the cutting faces are curved such that the cutting edges formed in this way have a cutting-edge rounding.

13. Solid milling tool according to one of Claims 1 to 12, **characterized in that** each of the lips comprises a lateral-side main lip region, an end-side secondary lip region and a radius region connecting the main lip region to the secondary lip region, wherein the following relationship holds for a corner radius r of the radius region for a solid milling tool having a diameter d: 0.005 d < r < 0.04 d.

## Revendications

1. Outil de fraisage complet (10) pour l'usinage rotatif de matériaux, présentant une tige allongée d'outil (11) qui présente une partie de travail (13) dans laquelle au moins trois lames hélicoïdales (17.1, 17.2, 17.3, 17.4) auxquelles sont associées des surfaces (20) d'enlèvement de copeaux sont disposées asymétriquement,
des surfaces libres (22a, 22b, 22c, 22d) disposées en arrière des lames dans le sens de rotation étant de plus prévues et le diamètre d'âme augmentant dans la partie de travail axialement depuis un côté frontal de l'outil de fraisage complet,
**caractérisé en ce que**
au moins dans une section frontale de la partie de travail, au moins une surface libre avant (22a) est prévue pour chaque lame et est voisine de la lame, et une surface libre arrière (22d) voisine d'une surface d'enlèvement de copeaux d'une lame suivante est prévue, la largeur de la surface libre arrière (22d) diminuant depuis le côté frontal de l'outil de fraisage complet pour au moins l'une des lames.

2. Outil de fraisage complet selon la revendication 1, **caractérisé en ce qu'**une première diminution de la largeur de la surface libre arrière d'une première des lames représente au plus 65 % d'une deuxième diminution de la largeur de la surface libre arrière d'une deuxième des lames.

3. Outil de fraisage complet selon la revendication 2, **caractérisé en ce qu'**au moins l'une des lames comporte une surface libre arrière dont la largeur est constante sur la partie de travail.

4. Outil de fraisage complet selon l'une des revendications 1 à 3, **caractérisé en ce que** la diminution de la largeur d'au moins l'une des surfaces arrière représente au moins 60 % de la largeur de la surface libre sur le côté frontal de l'outil de fraisage.

5. Outil de fraisage complet selon la revendication 4, **caractérisé en ce que** dans une section axiale avant de la partie de travail, un premier nombre de surfaces libres est identique pour toutes les lames tandis que dans une deuxième section axiale arrière de la partie de travail, au moins l'une des lames présente le premier nombre de surfaces libres et au moins une autre des lames un deuxième nombre de surfaces libres plus petit que le premier nombre.

6. Outil de fraisage complet selon l'une des revendications 1 à 5, **caractérisé par** au moins une autre surface libre disposée entre la surface libre avant et la surface libre arrière d'au moins l'une des lames.

7. Outil de fraisage complet selon l'une des revendications 1 à 6, **caractérisé en ce que** l'angle de pas des trois ou plusieurs lames hélicoïdales augmente dans la partie de travail partant du côté frontal de l'outil de fraisage complet.

8. Outil de fraisage complet selon l'une des revendications 1 à 7, **caractérisé en ce qu'**un premier angle de pas d'une des trois ou plusieurs lames hélicoïdales est d'au moins 2° plus grand qu'un deuxième angle de pas d'une deuxième des trois ou plusieurs lames hélicoïdales.

9. Outil de fraisage complet selon l'une des revendications 1 à 8, **caractérisé en ce que** le pas des dents n'est pas constant.

10. Outil de fraisage complet selon l'une des revendications 1 à 9, **caractérisé en ce que** la partie de travail comporte au moins une première section et au moins une deuxième section adjacente axialement par l'arrière à la première section, le taux de modification du diamètre d'âme dans l'ensemble de la première section étant plus petit que le taux de modification du diamètre d'âme dans l'ensemble de la deuxième section.

11. Outil de fraisage complet selon l'une des revendications 1 à 10, **caractérisé en ce qu'**un chanfrein de protection est formé sur la surface d'enlèvement de copeaux associé aux trois ou plusieurs lames.

12. Outil de fraisage complet selon l'une des revendications 1 à 11, **caractérisé en ce que** les surfaces libres avant se prolongent en les surfaces d'enlèvement de copeaux par des surfaces de lames, les surfaces de lames étant bombées de telle sorte que les tranchants de lames ainsi formés présentent un arrondi du tranchant de lames.

13. Outil de fraisage complet selon l'une des revendications 1 à 12, **caractérisé en ce que** chacune des lames comporte une partie principale de lame côté enveloppe, une partie secondaire de lame frontale et une partie en rayons qui relie la partie principale de lame et la partie secondaire de lame, avec pour un rayon r de sommet de la partie en rayons d'un outil de fraisage complet d'un diamètre d la relation 0,005 d < r < 0,04 d.
